# EUROPÄISCHE PATENTSCHRIFT

(11) **EP 0 773 199 B1**
(45) Veröffentlichungstag und Bekanntmachung des Hinweises auf die Patenterteilung: **15.12.1999**
(21) Anmeldenummer: 96117481.0
(22) Anmeldetag: 31.10.1996
(51) Int. Cl.: C04B 33/04, B28B 1/00, B28B 17/02

(54) **Grobkeramischer Körper, Formmasse und Verfahren zur Herstellung eines Granulats hierfür**
Coarse ceramic body, forming mass and process for making of a granule therefor.
Produit en ceremique grosse, composition à mouler et procédé pour la fabrication des granules

(30) Priorität: 07.11.1995 DE 19541481
(43) Veröffentlichungstag der Anmeldung: 14.05.1997
(73) Patentinhaber: Erlus Baustoffwerke AG, D-84086 Neufahrn (DE)
(72) Erfinder: Ingenpass, Heinz, Dipl.-Ing., 84061 Ergoldsbach (DE)
(74) Vertreter: Lohrentz, Franz, Dipl.-Ing.

(56) Entgegenhaltungen:
- WO-A-92/06783
- CH-A- 311 124
- DD-A- 300 288
- DE-A- 2 260 723
- DE-A- 4 201 615
- DE-A- 19 526 849
- PATENT ABSTRACTS OF JAPAN vol. 17, no. 506 (C-1110), 13.September 1993 & JP 05 137997 A (TOSOH CORP), 1.Juni 1993,
- PATENT ABSTRACTS OF JAPAN vol. 16, no. 449 (C-0986), 18.September 1992 & JP 04 156935 A (NGK INSULATORS LTD), 29.Mai 1992,

## Beschreibung

Die Erfindung betrifft grobkeramische Körper, insbesondere Dachziegel, Kaminrohre und dergleichen, sowie ein keramisches Granulat, insbesondere Schamotte-Granulat, zur Verwendung in einer Formmasse bei der Herstellung solcher grobkeramischer Körper.

Zur Herstellung von keramischen Erzeugnissen der geschilderten Art werden Gemenge aus keramischem Granulat und Bindeton verwendet. Das Granulat ist thermisch vorbehandelt, z.B. Schamotte, Mullit oder Korund, und hat allgemein eine hohe Kornfestigkeit. Das Granulat und das Bindemittel ergeben eine keramische Formmasse. Dieser Begriff umschließt feinkeramische und grobkeramische Formmassen, beispielsweise baukeramische Massen, Feuerfestmassen, Steingut und Steinzeug sowie technische Keramikmassen, insbesondere auf der Basis von Siliciumkarbid, Siliciumnitrit, Aluminiumoxid und dgl. Vor allem fallen hierunter die besonders preisgünstigen Massen aus den kostengünstigen Rohstoffen Ton und Schamotte.

Das Granulat stellt in der keramischen Formmasse eine unbildsame inerte Kornkomponente dar, die die Festigkeit des keramischen Erzeugnisses maßgeblich beeinflußt.

Schamotte-Granulat wird im allgemeinen durch Brennen von Tonen zu Schamottekörpern und deren anschließendes Mahlen hergestellt. Die Teilchen des auf diese Weise hergestellten Schamotte-Granulats sind splittrig. Daraus ergibt sich eine innige Bindung des Granulats mit dem Bindemittel, die wiederum zu einer hohen Festigkeit der aus einer entsprechenden keramischen Formmasse gebrannten keramischen Erzeugnisse führt. Jedoch sind die Kosten für die Herstellung und das Mahlen der Schamottekörper beträchtlich und erhöhen deshalb den Gestehungspreis der keramischen Erzeugnisse.

Aus der DE-A 32 08 956 ist es auch bereits bekannt, ein kornförmiges Granulat, insbesondere Schamotte-Granulat, dadurch zu erzeugen, daß eine aus Tonen und plastifizierenden Zusatzstoffen bestehende keramische Formmasse, die gegebenenfalls auch Mullit- oder Korundmehl enthält, im plastischen Zustand durch Extrusion zu Stiften geformt wird und diese stiftförmigen Partikel anschließend getrocknet und gebrannt werden. Durch derartige stiftförmige Partikel, die ein Verhältnis von Durchmesser zu Länge von kleiner als 1:5 haben sollen, wobei der Durchmesser von 0,5 bis 10 mm und die Länge von mindestens 2,5 bis 50 mm betragen sollen, wird die Festigkeit der aus einer entsprechenden Formmasse hergestellten keramischen Erzeugnisse wesentlich erhöht. Auch die Temperaturwechselbeständigkeit (TWB) soll durch Einsatz eines solchen stiftförmigen Granulats in der entsprechenden Formmasse vervielfacht werden.

Die Erhöhung der TWB durch Verwendung eines Schamotte-Granulats mit diesen stiftförmigen Teilchen hat sich jedoch für keramische Erzeugnisse wie z.B. Kaminrohre nicht bestätigt. Vielmehr gilt auch hierfür, daß wie bei dem splittrigen Schamotte-Granulat durch Steigerung des Granulatanteils in der keramischen Formmasse die Festigkeit erhöht werden kann, dadurch aber auch die TWB absinkt.

Aus der CH 311 124A ist es weiterhin schon bekannt, als Magerungsmittel Glühschamotte einzusetzen, die zunächst aus Ton-Granulat nahezu gleichen Durchmessers gebrannt wird. Jedoch wird diese Glühschamotte zur eigentlichen Verwendung in der Formmasse weiterverarbeitet, d. h. wiederum gemahlen und gegebenenfalls klassiert. Durch den Mahlvorgang entsteht wiederum ein splittriges Schamottegranulat, das die eingangs geschilderte Herabsetzung der TWB zur Folge hat.

Weiterhin sind auch schon Verfahren bekannt, mittels derer aus keramischem Pulvermaterial Keramikkugeln hergestellt werden, welche weitgehend frei von inneren Fehlern sind (PATENT ABSTRACTS OF JAPAN vol. 17, no. 506 (C-1110), 13. September 1993 & JP 05 137997 A (TOSOH CORP)). Keramische Kugeln, die solche Anforderungen an innere Fehlerfreiheit erfüllen müssen, sind für die grobkeramische Verwendung nicht bestimmt. Das gilt auch für weiterhin bekannte Verfahren zur Herstellung von keramischen Kugeln, die für feinkeramische Widerstände eingesetzt werden (PATENT ABSTRACTS OF JAPAN vol. 16, no. 449 (C-0986), 18. September 1992 & JP 04 156935 A (NGK INSULATORS LTD)).

Schließlich ist aus der DD 300288 A die Herstellung von abriebfesten keramischen Mahlkugeln bekannt, die zur Verwendung in Misch- und Mahlprozessen, z. B. in Rührwerks-Kugelmühlen, bestimmt sind. An solche Keramikkugeln sind hohe Anforderungen bezüglich der Abriebfestigkeit und der Sicherheit gegen Abplatzerscheinungen gestellt.

Der Erfindung liegt die Aufgabe zugrunde, grobkeramische Körper, insbesondere Kaminrohre und Dachziegel, und Formmassen zu deren Herstellung vorzuschlagen, in welchen ein keramisches Granulat der eingangs geschilderten Art als bildsame Komponente verwendet ist, das zu einer Steigerung der TWB führt, ohne eine merkliche Absenkung der Festigkeit zu bewirken.

Erfindungsgemäß wird dies mit grobkeramischen Körpern gemäß Anspruch 1 bzw. Formmassen gemäß Anspruch 3 erreicht.

Es hat sich gezeigt, daß die Bindung der sphärischen Teilchen mit dem Bindemittel in dem gebrannten keramischen Erzeugnis zur Erzielung einer hinreichend guten Festigkeit ausreicht, jedoch eine deutliche Steigerung der TWB zur Folge hat. Vorzugsweise haben die sphärischen Körner eine Teilchengröße von 0 bis 1 mm, sofern damit z.B. Dachziegel oder keramische Scherben, z.B. Kaminrohre, insbesondere solche mit relativ geringer Wandstärke, hergestellt werden. Stiftförmiges Granulat der vorstehend beschriebenen Art, insbesondere mit dessen größeren Teilchenabmessungen, erweist sich hierfür als ungeeignet. Die Teilchengröße kann aber auch bis maximal 3 mm betragen, wenn das Granulat allgemein für die Grobkeramik eingesetzt wird, z.B. für Schwerschamotte, Schamottesteine für den Feuerungsbau und dgl. Zweckmäßigerweise wird der Staubanteil bei der Herstellung des Granulats z.B. durch Aussieben beseitigt, sodaß letztlich vorzugsweise eine Teilchengröße von 0,5 bis 1 mm entsteht.

Die Herstellung des erfindungsgemäßen Granulats kann auf unterschiedliche Weise erfolgen. So kann nach einer ersten Vorgangsweise ein Gemisch aus Tonen, plastifizierenden Zusatzstoffen und Wasser als keramische Formmasse im plastischen Zustand zunächst zu Teilchen extrudiert werden. Diese Teilchen werden dann nach der Extrusion in einem herkömmlichen Pelletierverfahren zu sphärischen Körnern pelletiert und diese Körner anschließend gebrannt. Das Granulieren oder Pelletieren erfolgt hierzu vorzugsweise im Weg der Aufbaugranulation.

Nach einem anderen Verfahren gemäß der Erfindung erfolgt der Aufbau der keramischen Formmasse zu einem zu brennenden Granulat durch Verfahrensschritte, die bereits zum Stand der Technik gemäß 3 Abs.2 PatG zählen (DE-C 44 44 774).

Dieses Verfahren sieht vor, daß eine unbildsame inerte Kornkomponente mit einer mittleren Teilchengröße von 0,2 bis 0,5 mm mit Wasser gemischt wird, eine bildsame plastische Kornkomponente mit einer mittleren Teilchengröße von 1 bis 5 µm mit dem Gemisch der unbildsamen Kornkomponente vermischt wird und das so erhaltene Gemisch der unbildsamen und bildsamen Kornkomponenten daraufhin pelletiert wird, sodaß die Körner der unbildsamen Kornkomponente mit der bildsamen Kornkomponente umkleidet und dadurch Sekundärkörner mit sphärischer Form erzeugt werden. Anschließend wird dieses Sekundärkorn-Granulat gebrannt.

Der Umhüllungs- und Granulierprozeß bei diesem Verfahren setzt voraus, daß die unbildsame inerte Kornkomponente, die selbst wiederum Schamotte aber auch sonstiges Keramikmaterial, z.B. Mullit oder Korund, sein kann, ausreichend angefeuchtet ist, damit deren Körner als "Keimbildner" für die Sekundärkörner wirksam sein können. Dabei wird die in fein verteilter trockener Form vorliegende bildsame Kornkomponente an den "Keimbildnern" angelagert, wobei im Wege des Pelletiervorgangs, der in herkömmlichen Granulatoren oder Pelletiertellern stattfinden kann, die Sekundärkörner sphärisch geformt werden.

Nach einem besonders vorteilhaften Verfahrensschritt ist vorgesehen, daß nur zu Beginn des Verfahrens die unbildsame Kornkomponente von außerhalb des Verfahrens bereitgestellt wird, jedoch im Verlauf des Verfahrens zumindest zu einem erheblichen Teil durch eine Aussieb-Fraktion des fertig gebrannten Sekundär-Granulats gebildet wird. Auf diese Weise liefert das erfindungsgemäße Verfahren selbst zumindest zum Teil die unbildsame inerte Kornkomponente mit bereits sphärischer Gestalt, wodurch der Granuliervorgang beschleunigt wird.

Zweckmäßigerweise liegt die Teilchengröße der Aussieb-Fraktion bei 0,3 bis 0,5 mm.

Im Rahmen der Erfindung sind die Anteile der unbildsamen inerten Kornkomponente bzw. der bildsamen plastischen Kornkomponente nicht kritisch. Vielmehr können diese bei den herkömmlichen prozentualen Anteilen von >55% bildsame Komponente und <45% unbildsame Komponente liegen, jedoch auch davon abweichen, wie dies in dem vorstehend erwähnten Stand der Technik gemäß 3 Abs.2 PatG vorgeschlagen ist.

Von der Menge an Wasser, die zum Zweck des Pelletierens der unbildsamen Kornkomponente zugegeben ist, hängt es ab, ob vor dem Brennen die Sekundärkörner getrocknet werden müssen. Für die angestrebte Festigkeit der unter Verwendung des keramischen Granulats hergestellten keramischen Erzeugnisse ist es von Vorteil, eine Trocknung durchzuführen, wenn die Teilchengröße näher an der oberen angegebenen Grenze liegt.

Die Bindung der plastischen Kornkomponente an die "Keimbildner", d.h. die Körner der unbildsamen Kornkomponente, läßt sich dadurch steuern, daß der unbildsamen Kornkomponente zusätzlich zu dem Wasser eine Substanz mit Wasserrückhaltevermögen zugesetzt wird. Hierfür kann Carboxyl-Methylcellulose (CMC) eingesetzt werden.

Nach einer dritten Variante des Herstellungsverfahrens ist vorgesehen, ein bildsames Gemisch aus Tonen und Wasser in einem Mischbehälter einem Mischvorgang zu unterziehen, wobei der Wasseranteil ausreichend niedrig ist, um die Masse noch unter der Grenze zur Plastizität zu halten. In diesem Zustand zerfällt die Masse durch den Rührvorgang krümelig und erfährt im Sinne einer Granulation eine Formgebung, in deren Verlauf sphärisches Granulat entsteht. Die Teilchengröße, die zweckmäßigerweise 0 bis 5 mm, vorzugsweise 0 bis 3 mm, beträgt, wird dabei durch die Größe des Wasseranteils bestimmt. Je mehr Wasser zugegeben wird, umso größer wird die Teilchengröße des entstehenden Granulats.

Schließlich ist auch eine Herstellungsweise des Granulats mittels eines Trocken-Kollergangs möglich. Bei diesem Verfahren wird ein bildsames Gemisch, vorzugsweise bereits in krümeliger oder brockiger Form, in einen Kollergang eingebracht, dessen Mahlbahn als gitterartiger Rost ausgebildet ist, durch den das zerkleinerte Mahlgut wie durch ein Sieb hindurchgedrückt wird. Durch entsprechende Sieb-Schlitzweiten des Trocken-Kollergangs kann ein Granulat erzeugt werden, das anschließend in einem Granulier- oder Pelletiervorgang zu sphärischem Granulat ohne Änderung seiner Teilchengröße umgeformt wird.

## Patentansprüche

1. Grobkeramischer Körper, insbesondere Dachziegel, Kaminrohr oder dergleichen, bestehend aus einer vor dem Brennen bildsamen Bindekomponente, insbesondere Bindeton, und einer vor dem Brennen unbildsamen Kornkomponente in Form eines gebrannten keramischen Granulats, insbesondere Schamottegranulat,
**dadurch gekennzeichnet**,
daß das Granulat zumindest überwiegend aus im wesentlichen sphärischen Körnern besteht.

2. Grobkeramischer Körper nach Anspruch 1,
**dadurch gekennzeichnet**,
daß das Granulat eine mittlere Teilchengröße von 0,5 bis 1 mm hat.

3. Keramische Formmasse zur Herstellung eines grobkeramischen Körpers, insbesondere eines Dachziegels, Kaminrohrs oder dergleichen, die eine bildsame Komponente, insbesondere Bindeton, und eine unbildsame Kornkomponente in Form eines gebrannten keramischen Granulats, insbesondere Schamottegranulats, umfaßt,
**dadurch gekennzeichnet**,
daß das Granulat zumindest überwiegend aus im wesentlichen sphärischen Körnern besteht.

4. Keramische Formmasse nach Anspruch 3,
**dadurch gekennzeichnet**,
daß das Granulat eine mittlere Teilchengröße von 0,5 bis 1 mm hat.

5. Verfahren zur Herstellung eines Granulats für die Formmasse nach Anspruch 3 oder 4, bei dem ein Gemisch aus Tonen, plastifizierenden Zusatzstoffen und Wasser als keramische Formmasse im plastischen Zustand zu Teilchen extrudiert wird und die Teilchen anschließend gebrannt werden,
**dadurch gekennzeichnet**,
daß die Teilchen nach der Extrusion zu sphärischen Körnern auf eine gewünschte Teilchengröße pelletiert und die sphärischen Körner gebrannt werden.

6. Verfahren zur Herstellung eines Granulats für die Formmasse nach Anspruch 3 oder 4, bei dem ein Gemisch aus Tonen, plastifizierenden Zusatzstoffen und Wasser als keramische Formmasse im plastischen Zustand zu Teilchen extrudiert wird und die Teilchen anschließend gebrannt werden,
**dadurch gekennzeichnet**,
daß eine unbildsame inerte Kornkomponente mit einer mittleren Teilchengröße von 0,2 bis 0,5 mm mit Wasser gemischt wird, eine bildsame plastische Kornkomponente mit einer mittleren Teilchengröße von 1 bis 5 µm mit dem Gemisch der unbildsamen Kornkomponente vermischt wird, das so erhaltene Korngemisch pelletiert wird, wobei die Körner der unbildsamen Kornkomponente mit der bildsamen Kornkomponente umkleidet und dadurch Sekundärkörner mit sphärischer Form erzeugt werden, und anschließend die Sekundärkörner gebrannt werden.

7. Verfahren nach Anspruch 6,
**dadurch gekennzeichnet**,
daß der unbildsamen Kornkomponente zusätzlich zu Wasser eine Substanz mit Wasserrückhaltevermögen zugesetzt wird.

8. Verfahren nach Anspruch 6 oder 7,
**dadurch gekennzeichnet**,
daß das aus Sekundärkörnern bestehende Granulat vor dem Brennen getrocknet wird.

9. Verfahren nach einem der Ansprüche 6 bis 8,
**dadurch gekennzeichnet**,
daß als unbildsame inerte Kornkomponente eine Aussieb-Fraktion des keramischen Granulats anschließend an den Brennvorgang rückgeführt wird.

10. Verfahren nach Anspruch 9,
**dadurch gekennzeichnet**,
daß die mittlere Teilchengröße der Aussieb-Fraktion 0,3 bis 0,5 mm beträgt.

11. Verfahren zur Herstellung eines Granulats für die Formmasse nach Anspruch 3 oder 4,
**dadurch gekennzeichnet**,
daß ein Gemisch aus Tonen und Wasser in einem nichtplastischen Zustand in einem Rührwerk bewegt und dadurch ein sphärisches Granulat erzeugt wird und daß anschließend das sphärische Granulat gebrannt wird.

12. Verfahren zur Herstellung eines Granulats für die Formmasse nach Anspruch 3 oder 4,
**dadurch gekennzeichnet**,
daß ein Gemisch aus Tonen und Wasser einem Trocken-Kollergang zugeführt wird, dessen Mahlbahn einen Gitterrost aufweist, daß das aus dem Gitterrost ausgetragene Granulat zu einem sphärischen Granulat pelletiert wird und daß das sphärische Granulat anschließend gebrannt wird.

13. Verwendung eines keramischen Granulats, das zumindest überwiegend aus im wesentlichen sphärischen Körnern besteht, als unbildsame Kornkomponente in einer Formmasse nach Anspruch 3 oder 4 bei der Herstellung von grobkeramischen Körpern, insbesondere von Dachziegeln und Kaminrohren.

## Claims

1. A coarse-ceramic body, in particular a roof tile, chimney pipe or the like, comprising a binding component which is kneadable prior to the burning operation, in particular binding clay, and a grain component which is non-kneadable prior to the burning operation, in the form of a burnt ceramic granular material, in particular granular fireclay material, characterised in that the granular material at least predominantly comprises substantially spherical grains.

2. A coarse-ceramic body according to claim 1 characterised in that the granular material has a mean particle size of 0.5 to 1 mm.

3. A ceramic moulding material for the production of a coarse-ceramic body, in particular a roof tile, chimney pipe or the like, which includes a kneadable component, in particular binding clay, and a non-kneadable grain component in the form of a burnt ceramic granular material, in particular granular fireclay material, characterised in that the granular material at least predominantly comprises substantially spherical grains.

4. A ceramic moulding material according to claim 3 characterised in that the granular material has a mean particle size of 0.5 to 1 mm.

5. A process for producing a granular material for the moulding material according to claim 3 or claim 4, in which a mixture of clays, plasticising additives and water is extruded as a ceramic moulding material in the plastic condition to form particles and the particles are then burnt, characterised in that the particles are pelletised after the extrusion operation to form spherical grains to a desired grain size and the spherical grains are burnt.

6. A process for producing a granular material for the moulding material according to claim 3 or claim 4, in which a mixture of clays, plasticising additives and water is extruded as a ceramic moulding material in the plastic condition to form particles and the particles are then burnt, characterised in that a non-kneadable inert grain component with a mean particle size of 0.2 to 0.5 mm is mixed with water, a kneadable plastic grain component with a mean particle size of 1 to 5 µm is mixed with the mixture of the non-kneadable grain component, the grain mixture obtained in that way is pelletised, wherein the grains of the non-kneadable grain component are coated with the kneadable grain component and thereby secondary grains of spherical shape are produced, and then the secondary grains are burnt.

7. A process according to claim 6 characterised in that in addition to water a substance with a water retention capability is added to the non-kneadable grain component.

8. A process according to claim 6 or claim 7 characterised in that the granular material comprising secondary grains is dried prior to the burning operation.

9. A process according to one of claims 6 to 8 characterised in that as the non-kneadable inert grain component a sieved-out fraction of the ceramic granular material is then recycled to the burning operation.

10. A process according to claim 9 characterised in that the mean particle size of the sieved-out fraction is 0.3 to 0.5 mm.

11. A process for producing a granular material for the moulding material according to claim 3 or claim 4 characterised in that a mixture of clays and water is moved in a non-plastic condition in a stirrer and thereby a spherical granular material is produced and that then the spherical granular material is burnt.

12. A process for producing a granular material for the moulding material according to claim 3 or claim 4 characterised in that a mixture of clays and water is fed to a dry pan grinder whose grinding face has a grate, that the granular material which is discharged from the grate is pelletised to form a spherical granular material and that the spherical granular material is then burnt.

13. Use of a ceramic granular material which at least predominantly comprises substantially spherical grains as a non-kneadable grain component in a moulding material according to claim 3 or claim 4 in the production of coarse-ceramic bodies, in particular roof tiles and chimney pipes.

## Revendications

1. Produit en céramique grossière, en particulier tuile pour toit, conduit de cheminée ou analogue, comprenant un composant de liaison malléable avant cuisson, en particulier de l'argile liante, et un composant granulé non malléable avant cuisson sous forme d'un granulat céramique cuit, en particulier un granulat de chamotte,
**caractérisé en ce que** le granulat consiste, au moins à titre prépondérant, en grains essentiellement sphériques.

2. Produit en céramique grossière selon la revendication 1,
**caractérisé en ce que** le granulat présente une taille moyenne de particules comprise entre 0,5 et 1 mm.

3. Masse céramique moulable destinée à la fabrication d'un produit en céramique grossière, en particulier d'une tuile de toit, d'un conduit de cheminée ou analogue, qui réunit un composant malléable, en particulier de l'argile liante et un composant granulé non malléable sous forme d'un granulat céramique cuit, en particulier un granulat de chamotte,
**caractérisée en ce que** le granulat consiste, au moins à titre prépondérant, en grains essentiellement sphériques.

4. Masse céramique moulable selon la revendication 3,
**caractérisée en ce que** le granulat présente une taille moyenne de particules comprise entre 0,5 et 1 mm.

5. Procédé pour la fabrication d'un granulat destiné à la masse moulable selon la revendication 3 ou 4, dans lequel un mélange d'argiles, de substances additionnelles plastifiantes et d'eau est extrudé sous forme de particules de masse céramique moulable à l'état plastique, et les particules sont ensuite cuites,
**caractérisé en ce que** les particules, après extrusion, sont pelletisées en granulés sphériques présentant une taille de particules souhaitée, et les particules sphériques sont cuites.

6. Procédé pour la fabrication d'un granulat destiné à la masse moulable selon la revendication 3 ou 4, dans lequel un mélange d'argiles, de substances additionnelles plastifiantes et d'eau est extrudé sous forme de particules de masse céramique moulable à l'état plastique, et les particules sont ensuite cuites,
**caractérisé en ce qu**'un composant granulé inerte non malléable présentant une taille moyenne de particules comprise entre 0,2 et 0,5 mm est mélangé avec de l'eau, un composant granulé plastique malléable présentant une taille moyenne de particules comprise entre 1 et 5 µm est mélangé avec le mélange de composants granulé non malléable, le mélange granulé ainsi obtenu est pelletisé, à la suite de quoi les grains du composant granulé non malléable sont revêtus par le composant granulé malléable, et en ce que des grains secondaires de forme sphérique sont obtenus, et ensuite les grains secondaires sont cuits.

7. Procédé selon la revendication 6,
**caractérisé en ce qu**'au composant non malléable est ajoutée, en plus de l'eau, une substance possédant une capacité de rétention d'eau.

8. Procédé selon la revendication 6 ou 7,
**caractérisé en ce que** le granulat constitué par les grains secondaires est séché avant la cuisson.

9. Procédé selon l'une des revendications 6 à 8,
**caractérisé en ce que**, comme composant granulé inerte non malléable, on retourne ensuite au processus de cuisson une fraction du granulat céramique séparée par tamisage.

10. Procédé selon la revendication 9,
**caractérisé en ce que** la taille moyenne de particules de la fraction séparée par tamisage est comprise entre 0,3 et 0,5 mm.

11. Procédé pour la fabrication d'un granulat destiné à la masse moulable selon la revendication 3 ou 4,
**caractérisé en ce qu**'un mélange d'argiles et d'eau est agité dans un système agitateur à l'état non plastique, grâce à quoi est obtenu un granulat sphérique, et en ce que le granulat sphérique est ensuite cuit.

12. Procédé pour la fabrication d'un granulat destiné à la masse moulable selon la revendication 3 ou 4,
**caractérisé en ce qu**'un mélange d'argiles et d'eau est amené à un dessiccateur à cheminement vertical, dont la piste de broyage comporte une grille de grillage, en ce que le granulat sphérique sortant de la grille de grillage est pelletisé en un granulat sphérique et en ce que le granulat sphérique est ensuite cuit.

13. Application d'un granulat céramique qui consiste, au moins à titre prépondérant, en grains essentiellement sphériques, comme composant granulé non malléable dans une masse moulée selon la revendication 3 ou 4, dans la fabrication de produits en céramique grossière, en particulier de tuiles pour toits et de conduits de cheminée.
